# EUROPÄISCHE PATENTANMELDUNG

(11) **EP 1 174 336 A1**
(43) Veröffentlichungstag der Anmeldung: **23.01.2002**
(21) Anmeldenummer: 01100683.0
(22) Anmeldetag: 11.01.2001
(51) Int. Cl.: B63B 21/50, B63B 35/44, F03D 11/04

(54) **Ortsfeste Positionierung von Funktionseinheiten auf dem oder im Wasser**

(30) Priorität: 18.07.2000 DE 10034847
(71) Anmelder: Maierform Maritime Technology GmbH, 27568 Bremerhaven (DE)
(72) Erfinder: Ibe, Hans-Joachim Dipl.-Ing., 28209 Bremen (DE); Bergfelder, Jürgen Prof. Dr.-Ing., 50999 Köln (DE)
(74) Vertreter: Manitz, Finsterwald & Partner GbR

(57) **Zusammenfassung**

Die Erfindung betrifft eine Vorrichtung zur ortsfesten Positionierung von Funktionseinheiten wie z.B. Windkraftanlagen, Leuchttürmen, Sende- und/oder Empfangsanlagen, Radaranlagen, Forschungsstationen, Brükken, Flughäfen und dergleichen, auf dem oder im Wasser, insbesondere auf dem oder im Meer, mit wenigstens einem als Fundament oder als Plattform für die Funktionseinheit dienenden und insbesondere als Hohlkörper ausgebildeten Auftriebskörper (14), der durch eine Verankerung (16) in einer vorgegebenen Wassertiefe gehalten ist, wobei die Verankerung im Wasser Eigenauftrieb besitzt. Die Erfindung betrifft außerdem eine Verankerung, insbesondere eine Ankerkette, mit Eigenauftrieb in Wasser. Die Erfindung betrifft ferner ein Positionierungsverfahren.

## Beschreibung

Die Erfindung betrifft eine Vorrichtung (Anspruch 1) sowie ein Verfahren (Anspruch 18) zur ortsfesten Positionierung von Funktionseinheiten auf dem oder im Wasser sowie eine Verankerung (Anspruch 14) mit Eigenauftrieb in Wasser.

Bei der Fundamentierung von Seebauwerken wie z.B. Windkraftanlagen, Leuchttürmen, Sende- und/oder Empfangsanlagen, Radaranlagen, Forschungsstationen, Brücken, Flughäfen und dergleichen gibt es wirtschaftliche und/oder technische Machbarkeitsgrenzen, die bedingt sind durch die Wassertiefe und insbesondere durch bauwerkspezifische Kräfte wie Wind, Wellenkräfte (Seegangskräfte), Eisdruck, Schiffsstoß, Schiffsanlegedruck, Schub auf Rotoren bei Windkraftanlagen etc.

Bei einer herkömmlichen Fundamentierung ist eine auf dem Meeresboden angeordnete Fundamentplatte vorgesehen, die in der Regel durch eine Tiefgründung verankert ist. Bei großen Wassertiefen ist hierbei eine hohe, turmartige Schaftkonstruktion erforderlich, um die oberhalb des Wasserspiegels anzuordnende Nutzstruktur aufnehmen zu können.

Mit zunehmender Wassertiefe wird die Herstellung derartiger hekömmlicher Fundamentierungen aufwendiger, und ab einer bestimmten, von den jeweiligen Gegebenheiten abhängigen Wassertiefe ist die herkömmliche Fundamentierung aus wirtschaftlichen und/oder technischen Gründen nicht mehr durchführbar.

Für die Verankerung von auf dem Wasser schwimmenden Anlagen werden Ankerketten oder Ankerseile verwendet. Aufgrund ihres Eigengewichts hängen die Ankerketten bzw. Ankerseile durch, wobei dieser Durchhang umso ausgeprägter ist, je höher die erforderlichen Ankerkräfte sind. Der Durchhang führt dazu, daß die verankerten Anlagen nicht ortsfest positioniert werden können, sondern Horizontal-, Vertikal- und Drehbewegungen ausführen.

Es sind ferner zugspannungsverankerte Halbtaucher bekannt, die auch als "tension leg platform" (TLG) bezeichnet werden. Diese bestehen aus einem tiefliegenden Tauchkörper, der über Stützen eine oberhalb des Wasserspiegels befindliche Nutzstruktur trägt. Der Tauchkörper ist mit lotrechten Seilen verankert, die durch einen Auftriebsüberschuß des Tauchkörpers vorgespannt werden. Mit einer derartigen Konstruktion können zwar Drehbewegungen, nicht jedoch Horizontal- und Vertikalbewegungen der Nutzstruktur vermieden werden.

Aufgabe der Erfindung ist es, eine Möglichkeit zur ortsfesten Positionierung von Funktionseinheiten auf dem oder im Wasser, insbesondere auf dem oder im Meer, zu schaffen, wobei es insbesondere möglich sein soll, Seebauwerke von grundsätzlich beliebiger Größe auch bei großen Wassertiefen auf sichere Weise ortsfest derart zu verankern, daß die Funktionseinheit keine oder zumindest keine ihren Betrieb beeinträchtigenden Bewegungen vollführen kann.

Die Lösung dieser Aufgabe erfolgt durch die Vorrichtung mit den Merkmalen des Anspruchs 1, durch das Verfahren mit den Merkmalen des Anspruchs 18 und durch die Verankerung mit den Merkmalen des Anspruchs 14.

Durch die Erfindung kann ein Auftriebskörper in einer prinzipiell beliebigen Wassertiefe und insbesondere in einer vergleichsweise geringen Entfernung von der Wasseroberfläche ortsfest im Wasser positioniert werden. Ein auf dem Grund bzw. dem Meeresboden angeordnetes Fundament ist erfindungsgemäß nicht erforderlich. Die Erfindung ermöglicht es, die Auftriebskraft des Auftriebskörpers zu dessen eigener Lagefixierung zu nutzen.

Indem die Verankerung Eigenauftrieb besitzt, kann durch gezielte Dimensionierung der Gewichtskraft der Verankerung in einem beliebig einstellbaren Ausmaß entgegengewirkt werden. Bevorzugt ist die Verankerung derart ausgeführt, daß ihr Eigenauftrieb die Gewichtskraft gerade kompensiert, so daß sie im Wasser gewichtslos ist, d.h. schwimmt. Probleme mit Durchhang können daher nicht auftreten.

In einer besonders bevorzugten Variante der Erfindung umfaßt die Verankerung mehrere Ankerketten, wobei insbesondere die Ankerketten jeweils einen die Gewichtskraft zumindest zu einem wesentlichen Teil kompensierenden Eigenauftrieb besitzen. Dabei ist vorzugsweise vorgesehen, daß zumindest einige Kettenglieder als Auftriebskörper ausgebildet sind. Diese Kettenglieder können wenigstens einen insbesondere zylindrischen Hohlkörper aufweisen. Zur Aufnahme der Zugkräfte ist insbesondere vorgesehen, daß die Hohlkörper von jeweils einem insbesondere stab- oder stangenförmigen Zugelement durchsetzt sind.

Eine weitere bevorzugte Ausführung der Erfindung schlägt vor, daß der Auftriebskörper wenigstens drei Abspannknotenpunkte aufweist, an denen mehrere, vorzugsweise wenigstens zwei, Ankerketten zusammengeführt sind.

Der Auftriebskörper umfaßt vorzugsweise mehrere miteinander verbundene und insbesondere zylindrische Hohlkörper. Dabei kann der Hohlkörper eine insbesondere käfigartige Rahmen- oder Gitterstruktur aus miteinander verbundenen Rohren umfassen.

Der Auftriebskörper kann gemäß einer Variante der Erfindung pyramidenförmig ausgebildet sein und beispielsweise eine quadratische, vorzugsweise von vier Hohlzylindern gebildete Auftriebsbasis aufweisen. Grundsätzlich kann die vorzugsweise aus einzelnen Hohlzylindern aufgebaute Auftriebsbasis jede beliebige und insbesondere auch nicht-quadratische Form aufweisen und z. B. dreieckig ausgebildet sein.

Bisher durchgeführte Untersuchungen und Berechnungen haben ergeben, daß eine erfindungsgemäße ortsfeste Positionierung von Auftriebskörpern und damit von den Auftriebskörper als Fundament oder Plattform nutzenden Funktionseinheiten in Wassertiefen zwischen 25 m und 100 m möglich ist. Grundsätzlich ist die Erfindung aber auch in sowohl geringeren als auch größeren Wassertiefen einsetzbar.

Der Einsatz der Erfindung ist des weiteren nicht auf das Meer beschränkt, sondern kann auch in Binnengewässern erfolgen.

Es wurde außerdem festgestellt, daß die erzielbaren Auftriebskräfte ausreichen, um große Seebauwerke wie beispielsweise Windkraftanlagen, Leuchttürme, Sende- und/oder Empfangsanlagen, Radaranlagen oder Forschungsstationen zu tragen. Bei entsprechender Dimensionierung ist die Erfindung grundsätzlich auch für wesentliche größere Bauwerke wie beispielsweise Brücken und seegestützte Flughäfen geeignet. Insbesondere zur Errichtung seegestützter Flughäfen können eine große Anzahl von erfindungsgemäßen Auftriebskörpern zu einem Gesamtfundament oder zu einer Gesamtplattform zusammengefaßt werden.

Bei den erwähnten Untersuchungen und Berechnungen wurden gezeitenbedingte Wasserstandsänderungen in der Größenordnung von etwa 5 m berücksichtigt. Des weiteren hat sich gezeigt, daß Wellenhöhen, d.h. maximale Höhenunterschiede zwischen Wellenberg und Wellental, in der Größenordnung von 20 m und selbst extreme Wind- und Wellenkräfte (im Fall einer sog. "Jahrhundertwelle") die ortsfeste Positionierung des Auftriebskörpers bzw. der darauf stehenden Funktionseinheit nicht beeinträchtigen. Des weiteren wurde ermittelt, daß auch Kräfte durch Eisgang für die erfindungsgemäße Vorrichtung unkritisch sind.

Die Lösung der der Erfindung zugrundeliegenden Aufgabe erfolgt außerdem durch das in Anspruch 18 angegebene Verfahren, bei dem wenigstens ein als Fundament oder als Plattform für die Funktionseinheit dienender und insbesondere als Hohlkörper ausgebildeter Auftriebskörper versenkt und in einer vorgegebenen Wassertiefe mittels einer Verankerung, die im Wasser Eigenauftrieb besitzt, verankert wird.

Außerdem erfolgt die Lösung der der Erfindung zugrundeliegenden Aufgabe gemäß Anspruch 14 durch eine Verankerung mit Eigenauftrieb in Wasser, wobei vorzugsweise die Verankerung mehrere Ankerketten umfaßt, die jeweils Eigenauftrieb besitzen.

Bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: eine Vorrichtung gemäß einer Ausführungsform der Erfindung in einer Seitenansicht ohne Funktionseinheit,
- Fig. 2a und 2b: eine Ausführungsform einer als Ankerkette ausgebildeten erfindungsgemäßen Verankerung,
- Fig. 3: eine Draufsicht auf die Vorrichtung von Fig. 1 in einer etwa in Höhe des Meeresspiegels verlaufenden Schnittebene,
- Fig. 4: einen gegenüber Fig. 3 vergrößert dargestellten Eckbereich der erfindungsgemäßen Vorrichtung, und
- Fig. 5: eine Ansicht entsprechend Fig. 1 mit einer als Windkraftanlage ausgebildeten Funktionseinheit.

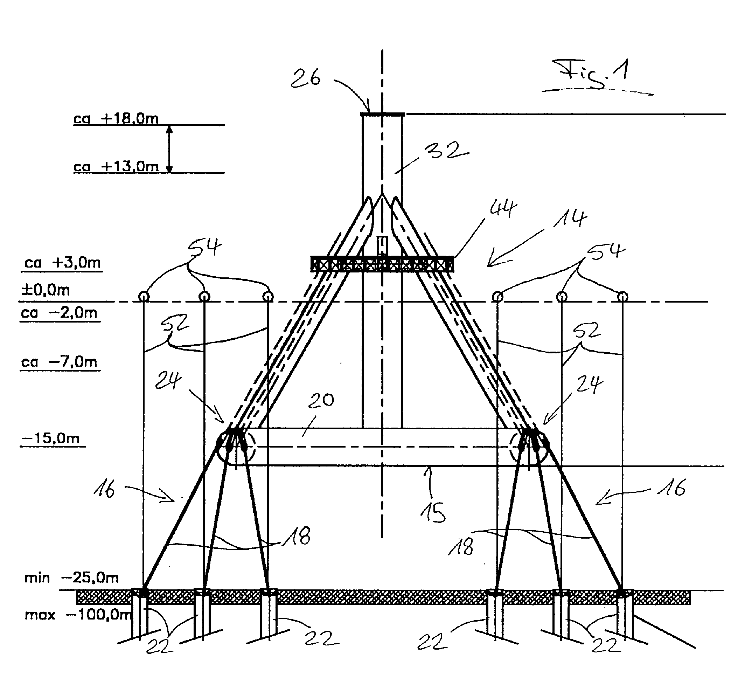

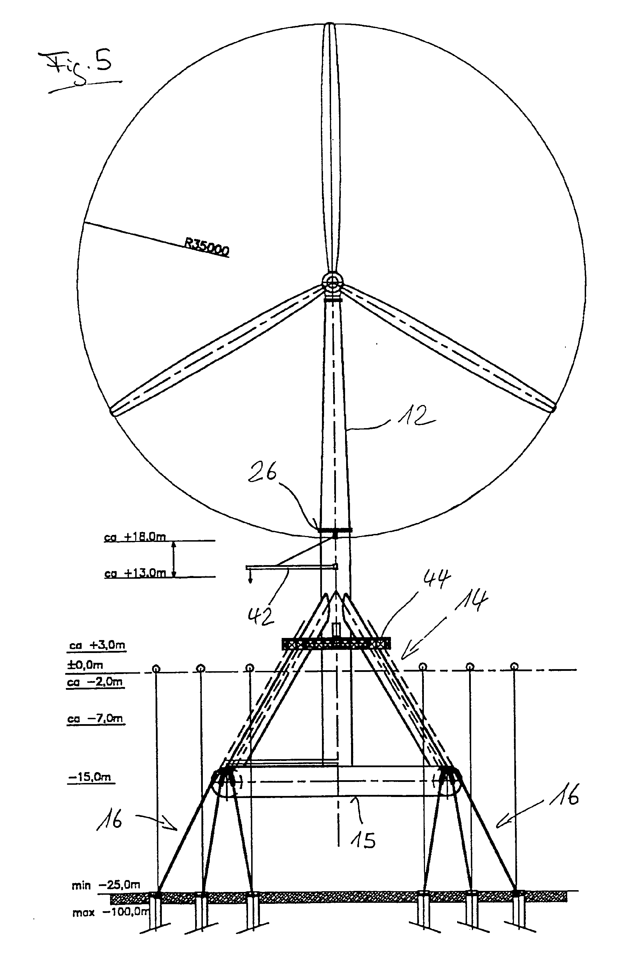

Fig. 1 zeigt eine Ausführungsform eines mehrere miteinander verbundene Hohlzylinder bzw. Rohre 20 umfassenden Auftriebskörpers 14, der mit mehreren gewichtslosen, d.h. jeweils die eigene Gewichtskraft zumindest näherungsweise kompensierenden Eigenauftrieb besitzenden, Ankerketten 18 am Meeresboden verankert ist. Der Auftriebskörper 14 ist pyramidenförmig mit einer quadratischen Auftriebsbasis 15 ausgebildet und ragt bei Normalwasserstand aus dem Wasser heraus. Der aus dem Wasser ragende Abschnitt des Auftriebskörpers kann mit einem in Fig. 1 nicht dargestellten Kran 42 (vgl. Fig. 5) versehen sein und weist einen Schiffsanleger 44 auf. Die Seitenlänge der von vier Hohlzylindern 20 gebildeten quadratischen Auftriebsbasis 15 kann beispielsweise etwa 30 m betragen.

Die Ankerketten 18 sind jeweils mit ihrem grundseitigen Ende an in den Boden gerammten Pfahlankern 22 befestigt.

Bei einem herkömmlichen, tief gegründeten Fundament werden die Bauwerkslasten über die auf dem Grund bzw. Meeresboden ruhende Fundamentplatte auf die Pfähle abgegeben. Die Pfähle wiederum geben die Lasten über die Pfahllänge (bei Zugbeanspruchung) oder über den Spitzendruck (bei Druckbeanspruchung) an den Boden ab.

Normale, vertikal nach unten wirkende Bauwerkslasten (Lot-Lasten) erzeugen in den Pfählen Druckkräfte. Die spezifischen Bauwerkslasten wie z.B. Wind, Wellenkräfte (Seegangslasten), Eisdruck, Schiffsstoß, Schiffsanlegedruck, Schub auf Rotoren von Windkraftanlagen etc. erzeugen zum Teil erhebliche Horizontalkräfte, die auf das jeweilige Bauwerk und somit auf die Fundamentierung einwirken. Bei der herkömmlichen, tiefgegründeten Fundamentierung werden zur Beherrschung derartiger Kräfte die Pfähle schräg gestellt.

Die auf das Bauwerk wirkenden Horizontalkräfte erzeugen in den Pfählen entweder Druck- oder Zugkräfte, und zwar auf der Seite, aus der die Horizontalkräfte wirken, Zugkräfte und auf der gegenüberliegenden Seite Druckkräfte.

Erfindungsgemäß wird nun anstelle einer auf dem Grund bzw. Meeresboden liegenden Fundamentplatte, wie sie bei der herkömmlichen Fundamentierung verwendet wird, ein durch eine Verankerung 16 in einer vorgegebenen Wassertiefe gehaltener Auftriebskörper 14 eingesetzt, der auch als unter Auftrieb stehender Tauchkörper bezeichnet werden kann.

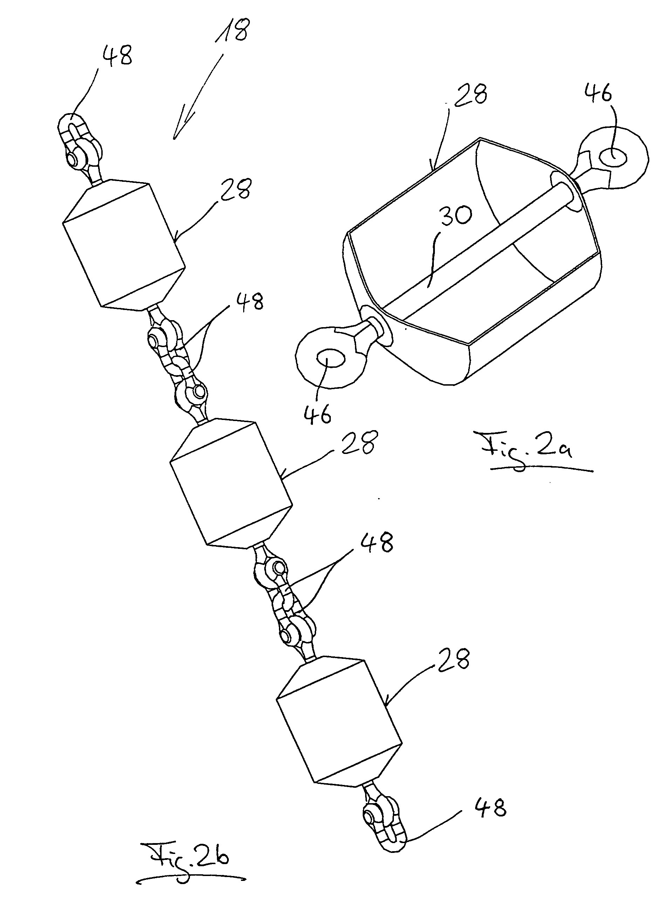

Die in der bevorzugten Ausführungsform der Erfindung gemäß Fig. 1 als Verankerung 16 dienenden, gewichtslosen Ankerketten 18 sind beispielsweise derart ausgebildet, wie es in Fig. 2a und 2b dargestellt ist. Fig. 2b zeigt drei jeweils als Auftriebselemente ausgebildete Kettenglieder 28, die jeweils einen im wesentlichen zylindrischen Hohlkörper aufweisen. Die Hohlkörper sind jeweils von einem stabförmigen Zugelement 30 (vgl. Fig. 2a) durchsetzt, das zur Aufnahme der Zugkräfte dient. Die Zugelemente 30 sind an ihren Enden außerhalb des Hohlkörpers 20 mit einer balligen Erweiterung versehen, in der ein Auge 46 ausgebildet ist, so daß zwei aufeinanderfolgende Auftriebskettenglieder 28 durch ein oder mehrere ringförmige Verbindungselemente 48 gelenkig miteinander verbunden werden können. In der Ausführungsform von Fig. 2a und 2b sind zwischen zwei aufeinanderfolgenden Gliedern 28 zwei derartige Verbindungselemente 48 vorgesehen.
Die Auftriebselemente 28 der Ankerkette 18 sind derart dimensioniert, daß im Wasser ihr Gesamtauftrieb die Gewichtskraft der gesamten Kette gerade kompensiert, so daß im Wasser ein "gewichtsloser" Zustand erreicht wird, d.h. die Kette im Wasser schwimmt. Auf diese Weise können die Ankerketten 18 durch den Auftriebskörper 14 derart gespannt werden, daß sie geradlinig verlaufen, d.h. die Ankerketten 18 können mittels des Auftriebskörpers 14 problemlos gerade gezogen werden.

Der Auftriebskörper 14 ist derart dimensioniert, daß dessen Auftriebskraft auch bei Einwirkung maximaler Horizontalkräfte auf die jeweilige Funktionseinheit, die in Fig. 1 nicht dargestellt ist, stets größer ist als die entgegengesetzten, vertikal nach unten gerichteten Druckkräfte, die sich zusammensetzen aus den normalen Gewichts- und Druckkräften und den nur an einer Seite auftretenden Druckkräften, die aus den erwähnten Horizontalkräften resultieren.

Diese Dimensionierung des Auftriebskörpers 14 stellt sicher, daß die von den Ankerketten 18 gebildete Verankerung 16 in jeder Situation und auch bei extremen externen Belastungen durch auf die jeweilige Funktionseinheit einwirkende Kräfte stets durchhanglos ist und nicht schlaff fallen kann.

Wie Fig. 1 zeigt, befindet sich die Auftriebsbasis 15 in einer Wassertiefe von etwa 15 m, in der sie auch bei extremen Wellenbewegungen stets unter Wasser ist, wobei hierfür gemäß Fig. 1 minimale Wasserstände in Wellentälern von etwa -7,0 m angenommen wurden. Die Auftriebsbasis 15 allein ist derart dimensioniert, daß die insgesamt benötigte Auftriebskraft allein von der Auftriebsbasis 15 aufgebracht werden könnte.
Neben den erwähnten minimalen Wasserständen aufgrund von Wellentälern berücksichtigt die Erfindung außerdem - wie Fig. 1 zeigt - Hochwasser von bis zu etwa 3,0 m und Niedrigwasser von bis zu etwa -2,0 m.

Ein Vertikalschaft 32 des Auftriebskörpers 14 ragt mit seinem oberen freien Ende so weit aus dem Wasser heraus, daß ein am freien Ende ausgebildeter Kopplungsabschnitt 26, auf den an anderer Stelle noch näher eingegangen wird, auch bei maximalen Wellenbergen von etwa 13,0 m nicht unter Wasser ist, wobei hier ein Sicherheitsabstand von 5 m vorgesehen ist, so daß sich der Kopplungsabschnitt 26 etwa 18,0 m oberhalb des Normalwasserstands 0,0 m befindet.

In Fig. 1 ist außerdem angegeben, daß bei der gezeigten Ausführungsform der Erfindung die erfindungsgemäße Positionierung von Funktionseinheiten in Wassertiefen von mindestens etwa 25 m bis maximal etwa 100 m erfolgen kann.

Die Befestigung der Ankerketten 18 an den in den Meeresboden gerammten Pfählen, d.h. die Verankerung der Ankerketten 18 selbst, ist in entsprechender Weise für eine maximale Zugkraft ausgelegt, die in der Praxis nicht auftritt. Die Zugkraft an den Pfählen 22 setzt sich zusammen aus der normalen, durch die Auftriebskraft des Auftriebskörpers 14 bedingten Zugkraft sowie aus den nur an einer Seite als Reaktion auf die vorstehend erwähnten Horizontalkräfte auftretenden Zugkräften.

Die Auftriebskraft des Auftriebskörpers 14 ist also derart bemessen, daß er auch durch extreme Horizontalkräfte nicht verkippt werden kann, d.h. auf der einen Seite nicht in die Tiefe gedrückt und folglich auf der gegenüberliegenden nicht angehoben werden kann.

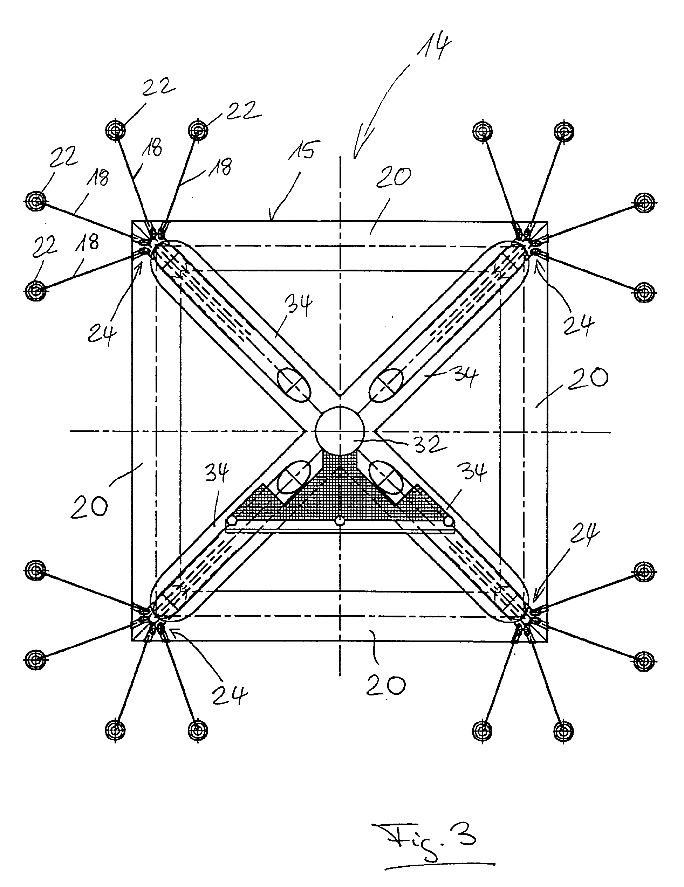

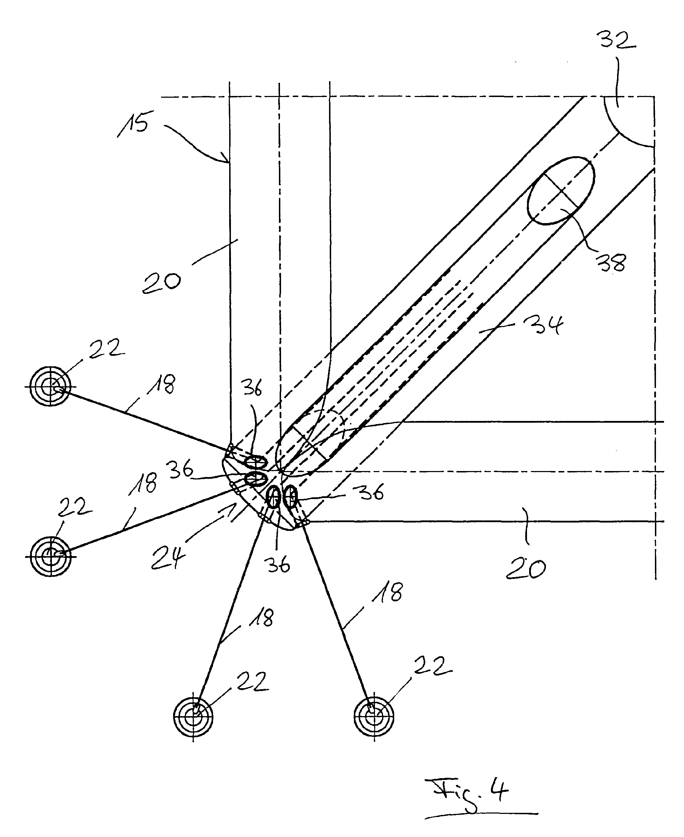

Fig. 3 zeigt eine Draufsicht auf den am Meeresboden verankerten Auftriebskörper 14 aus einer etwa bei Normalwasserstand in Höhe des Meeresspiegels verlaufenden Schnittebene. Dargestellt ist die von den vier röhrenförmigen Hohlkörpern 20 gebildete, quadratische Auftriebsbasis 15 des Auftriebskörpers 14. An jeder der vier Ecken der Auftriebsbasis 15 laufen vier Ankerketten 18 sternförmig an einem Abspannknotenpunkt 24 zusammen. Fig. 4 zeigt einen Eckbereich und somit einen Abspannknotenpunkt 24 des Auftriebskörpers 14 in einer vergrößerten Darstellung.

Ausgehend von jedem Abspannknotenpunkt 24 werden die Ankerketten 18 gemeinsam an einem jeweiligen, schräg nach oben verlaufenden, ebenfalls hohlzylindrischen Auftriebselement 34 des Auftriebskörpers 14 entlang zu dem Vertikalschaft 32 des Auftriebskörpers 14 geführt, wie es in Fig. 1, 3 und 4 durch gestrichelte Linien angedeutet ist. Dabei werden vorzugsweise die Ankerketten 18 jeweils innerhalb der Schrägstützen 34 geführt, und zwar von jeweiligen Eintriffsöffnungen 36 zu einer gemeinsamen Austrittsöffnung 38 (vgl. Fig. 4).

Am Vertikalschaft 32 wird die jeweilige Funktionseinheit montiert, und zwar über den auch als Schnittstelle oder Stoßstelle bezeichneten Kopplungsabschnitt 26 (vgl. Fig. 1).

Ein Vorteil der Erfindung ist, daß der Auftriebskörper 14 an Land zusammengesetzt und an den jeweiligen Einsatzort geschleppt werden kann. Eine aufwendige und kostspielige seegestützte Montage ist daher nicht erforderlich.

Der erfindungsgemäße Auftriebskörper 14 ist mit einer nicht dargestellten Ballastregelung versehen, die es gestattet, den Auftriebskörper 14 an der gewünschten Stelle gezielt abzusenken und anschließend zum Spannen der Verankerung 16 bzw. der Ankerketten 18 wieder anzuheben.

Bei der ortsfesten Positionierung des Auftriebskörpers 14 wird vor Ankoppelung der jeweiligen Funktionseinheit an den Kopplungsabschnitt 26 des Auftriebskörpers 14 eine mobile Montageeinheit gekoppelt. Auf die Vorgehensweise beim Positionieren des Auftriebskörpers 14 mittels der mobilen Montageeinheit wird nachstehend näher eingegangen.

Fig. 1 zeigt außerdem, daß jeder Pfahlanker 22 über ein Hilfsseil 52 mit einer Boje 54 verbunden ist. Über das Hilfsseil 52 kann z.B. ein Taucher den jeweiligen Pfahlanker 22 erreichen, um die betreffende Ankerkette 18 zu befestigen. Außerdem können die Hilfsseile 52 dazu benutzt werden, eine Hilfseinrichtung wie z.B. eine Kamera zum jeweiligen Pfahlanker 22 zu führen.

Gemäß dem bevorzugten erfindungsgemäßen Verfahren zur ortsfesten Positionierung des Auftriebskörpers 14 wird eine in den Figuren nicht dargestellte mobile Montageeinheit verwendet, die auch als Kettenspann-Modul bezeichnet wird, da eine wesentliche Funktion dieses Moduls darin besteht, die Ankerketten 18 zu spannen.

Bei der Verankerung des Auftriebskörpers 14 an der gewünschten Position kommt es darauf an, daß alle Ankerketten 18 die gleiche Vorspannung besitzen. Diese Anforderung wird durch die im folgenden näher beschriebene Montageeinheit erfüllt.

Die Montageeinheit bzw. das Kettenspann-Modul ist in der bevorzugten Ausführung ein ähnlich einem Container ausgebildetes Stahlbauwerk, das im Unterschied zu einem herkömmlichen Container im Bodenbereich eine Flanschkonstruktion aufweist. Diese Flanschkonstruktion dient dazu, das Kettenspann-Modul an den Kopplungsabschnitt 26 des Vertikalschafts 32 des Auftriebskörpers 14 zu koppeln. Hierzu wird die Montageeinheit mit ihrer Flanschkonstruktion auf den entsprechenden Gegenflansch bzw. den Kopplungsabschnitt 26 des Vertikalschafts 32 aufgesetzt und verschraubt. Dabei handelt es sich bei dem Flansch bzw. Kopplungsabschnitt 26 des Auftriebskörpers 14 um den gleichen Kopplungsabschnitt 26, der später die jeweilige Nutzstruktur bzw. Funktionseinheit 12 (vgl. Fig. 5) aufnimmt.

Das Kettenspann-Modul umfaßt u.a. eine Dieselgenerator-Einheit zur Energieversorgung des Moduls, eine Pumpeneinheit zum Be- und Entbelasten des Auftriebskörpers 14, für jede zu spannende Ankerkette 18 einen Hydraulikzylinder einschließlich allen erforderlichen Zubehörs wie z.B. Hydrauliköltank, Hydraulikpumpen und Ventilstation, sowie Präzisionsmeßeinrichtungen insbesondere in Form von sogenannten elektronischen Libellen zur Ausrichtung des Auftriebskörpers 14 exakt lotrecht bezogen auf die Schaftachse der jeweiligen Funktionseinheit 12.

Zur ortsfesten Positionierung des Auftriebskörpers 14 wird dieser zunächst als Schwimmkörper an die gewünschte Ankerstelle geschleppt und dort mittels Hilfsankern provisorisch verankert. Anschließend wird mit Hilfe eines Schwimmkrans die mobile Montageeinheit bzw. das Kettenspann-Modul auf den Auftriebskörper 14 aufgesetzt. Hilfspontons bzw. Hilfsschwimmkörper mit Winden, Umlenkrollen und Führungen für Seile werden mit dem Auftriebskörper 14 derart verbunden, daß der Auftriebskörper 14 in kontrollierter Weise von den Hilfspontons abgelassen werden kann. Bevorzugt werden zwei Hilfspontons eingesetzt.

Im Anschluß an die Befestigung der Hilfspontons werden im Auftriebskörper 14 vorgesehene Ballastzellen mit Wasser gefüllt. Die Steuerung dieser Beballastung erfolgt vom Kettenspann-Modul aus. Hierdurch wird der Auftriebskörper 14 kontinuierlich abgesenkt, wobei die Winden der Hilfspontons dafür sorgen, daß der Auftriebskörper 14 zu jedem Zeitpunkt eine waagerechte Lage einnimmt. Dies wird während des Absenkens durch Gegenhalten mit einer konstanten Zugkraft erreicht, wobei zu diesem Zweck hydraulische Konstantzugwinden eingesetzt werden können.

Der Ballast- oder Abtauchvorgang ist beendet, sobald eine der gewünschten endgültigen Tauchtiefe entsprechende Wassertiefe näherungsweise erreicht ist. Die bereits mit den Hydraulikzylindern des Kettenspann-Moduls verbundenen Ankerketten 18 werden nun in die Ankerpfähle 22 eingehakt, die zuvor in den Meeresboden gerammt wurden. Anschließend werden die Ankerketten 18 mittels der Hydraulikzylinder strammgezogen.

Danach werden die noch bestehenden Seilverbindungen zwischen den Hilfspontons und dem Auftriebskörper 14 gelöst, womit der Einsatz der Hilfspontons beendet ist.

Nach dieser ersten Phase, die auch als Grobspannung bezeichnet werden kann, wird ein Feinspannvorgang eingeleitet, bei dem zunächst das im Auftriebskörper 14 vorhandene Ballastwasser wieder abgepumpt wird. Hierdurch wird der gesamte Auftrieb des Auftriebskörpers 14 als Zugkraft in den Ankerketten 18 wirksam. Anschließend werden die Hydraulik- oder Vorspannzylinder für die Ankerketten 18 auf eine gemeinsame Ringleitung geschaltet, so daß in jedem Zylinder der gleiche Hydraulikdruck herrscht und somit jede Ankerkette 18 mit der gleichen Zugkraft beaufschlagt wird. Der gemeinsame Systemhydraulikdruck für alle Zylinder wird daraufhin erhöht, so daß alle Zylinder mit der gleichen Kraft beaufschlagt und alle Ankerketten 18 verkürzt werden. Mittels der Kettenspanneinrichtung zieht sich der Auftriebskörper 14 also gewissermaßen selbst an den Ankerketten 18 nach unten. Dieser Abtauchvorgang ist beendet, sobald die vorgegebene Wassertiefe erreicht ist.

Eine Schieflage des Auftriebskörpers 14 kann seine Ursache in einem unsymmetrisch verteilten Auftriebsvolumen des Auftriebskörpers und/oder in unsymmetrisch angeordneten Eigengewichtskomponenten des Auftriebskörpers 14 haben. Derartige Asymmetrien können durch entsprechende Anordnung von Gegengewichten kompensiert werden, die bereits bei der Herstellung des Auftriebskörpers 14 vorgesehen werden können. Eventuell verbleibende Rest-Unsymmetrien können vor Ort während des Vorspannens dadurch ausgeglichen werden, daß die Ballastzellen des Auftriebskörpers 14 mit entsprechenden Ausgleichswassermengen gefüllt werden.

Der Feinspannvorgang ist abgeschlossen, wenn die Achse des Vertikalschafts 32 exakt vertikal verläuft, in allen Ketten-Vorspannzylindern der gleiche Hydraulikdruck herrscht und die vorgegebene Wassertiefe erreicht ist. Die Ankerketten 18 werden dann kurz unterhalb der Ketten-Vorspannzylinder mit sogenannten Kettenstoppern am Auftriebsmodul 14 fixiert. Die Verbindung zwischen den Ankerketten 18 und deren Vorspannzylindern kann dann gelöst werden. Anschließend wird die Kopplung zwischen dem Auftriebskörper 14 und der mobilen Montageeinheit gelöst, die Montageeinheit vom Vertikalschaft 32 des Auftriebskörpers 14 abgehoben und zum nächsten zu verankernden Auftriebskörper 14 verbracht.

Nach der vorstehend beschriebenen ortsfesten Positionierung des Auftriebskörpers 14 und dem Entfernen der mobilen Montageeinheit kann die jeweilige Nutzstruktur oder Funktionseinheit 12 mit dem Kopplungsabschnitt 26 des Auftriebskörpers 14 verbunden werden.

Der Auftriebskörper 14 und die von den Ankerketten 18 gebildete Verankerung 16 werden individuell an die Eigenschaften der jeweiligen Funktionseinheit, insbesondere an deren Größe, an deren Gewicht und an die resultierende Gesamtbauhöhe angepaßt. Das jeweilige Gesamtbauwerk, das die Funktionseinheit, d.h. die Nutzstruktur, und das von dem verankerten Auftriebskörper 14 gebildete Fundament umfaßt, kann erfindungsgemäß derart ausgeführt werden, daß es den internationalen Vorschriften für Seebauwerke und den geltenden Sicherheitsbestimmungen genügt.

Fig. 5 zeigt ein bevorzugtes Anwendungsbeispiel der Erfindung zur ortsfesten Positionierung einer Windkraftanlage 12. Bei diesem Anwendungsfall entstehen extrem hohe Belastungen. Für die Auslegung des Auftriebskörpers 14 und dessen Verankerung 16 wurde eine an der Schnittstelle bzw. Stoßstelle 26 zwischen Funktionseinheit 12 und Auftriebskörper 14 wirkende Horizontalkraft von 1800 kN zugrunde gelegt. Zusätzliche Belastungen wurden mit einem pauschalen Erhöhungsfaktor berücksichtigt.

Für einen vergleichbaren Anwendungsfall wurden von der Anmelderin beim Germanischen Lloyd Berechnungen in Auftrag gegeben. Diese zeigten, daß der im Beispiel der Fig. 5 angesetzte pauschale Erhöhungsfaktor realistisch gewählt wurde und ausreichende Sicherheitsreserven vorhanden sind.

### Bezugszeichenliste

- 12: Funktionseinheit, Windkraftanlage
- 14: Auftriebskörper
- 15: Auftriebsbasis
- 16: Verankerung
- 18: Verankerungselement, Ankerkette
- 20: Hohlkörper, Hohlzylinder des Auftriebskörpers
- 22: Pfahlanker
- 24: Abspannknotenpunkt
- 26: Kopplungsabschnitt
- 28: Kettenglied, Hohlkörper der Ankerkette
- 30: Zugelement
- 32: Vertikalschaft
- 34: schräges Auftriebselement, Schrägstütze
- 36: Eintrittsöffnung
- 38: Austrittsöffnung
- 42: Kran
- 44: Schiffsanleger
- 46: Auge
- 48: Verbindungselement
- 52: Hilfsseil
- 54: Boje

## Patentansprüche

1. Vorrichtung zur ortsfesten Positionierung von Funktionseinheiten (12) wie z.B. Windkraftanlagen, Leuchttürmen, Sende- und/oder Empfangsanlagen, Radaranlagen, Forschungsstationen, Brücken, Flughäfen und dergleichen, auf dem oder im Wasser, insbesondere auf dem oder im Meer, mit wenigstens einem als Fundament oder als Plattform für die Funktionseinheit (12) dienenden und insbesondere als Hohlkörper ausgebildeten Auftriebskörper (14), der durch eine Verankerung (16) in einer vorgegebenen Wassertiefe gehalten ist, wobei die Verankerung (16) im Wasser Eigenauftrieb besitzt.

2. Vorrichtung nach Anspruch 1,
**dadurch gekennzeichnet,**
**daß** die Verankerung (16) mehrere jeweils langgestreckte und unter einem Winkel zur Vertikalen verlaufende Verankerungselemente (18) umfaßt, und/oder
**daß** die Verankerung (16) mehrere Ankerketten (18) umfaßt.

3. Vorrichtung nach einem der vorhergehenden Ansprüche,
**dadurch gekennzeichnet,**
**daß** die Verankerung (16) in Form einer Abspanneinrichtung vorgesehen ist, und/oder
**daß** die Verankerung (16) durch den Auftriebskörper (14) gespannt ist, und/oder
**daß** die Verankerung (16) durch den Auftriebskörper (14) derart vorgespannt ist, daß die Auftriebskraft des Auftriebskörpers (14) größer ist als die erwartete, der Auftriebskraft entgegenwirkende Maximaldruckkraft.

4. Vorrichtung nach einem der vorhergehenden Ansprüche,
**dadurch gekennzeichnet,**
**daß** der Auftriebskörper (14) mehrere miteinander verbundene und insbesondere zumindest näherungsweise zylindrische Hohlkörper (20) umfaßt, und/oder
**daß** der Auftriebskörper (14) eine bevorzugt von mehreren, insbesondere vier, Hohlzylindern (20) gebildete und vorzugsweise quadratische oder dreieckige Auftriebsbasis (15) aufweist.

5. Vorrichtung nach einem der vorhergehenden Ansprüche,
**dadurch gekennzeichnet,**
**daß** die vorgegebene Wassertiefe derart gewählt ist und eine Auftriebsbasis (15) des Auftriebskörpers (14) derart dimensioniert ist, daß bei erwarteten, Wellenbewegungen berücksichtigenden Tiefstwasserständen die Auftriebsbasis (15) stets vollständig unter Wasser ist und die jeweils erforderliche Auftriebskraft allein durch die Auftriebskraft der Auftriebsbasis (15) gegeben ist, und/oder
**daß** der Auftriebskörper (14) pyramidenförmig ausgebildet und vorzugsweise derart dimensioniert ist, daß die Pyramidenspitze zumindest bei Normalwasserstand, insbesondere auch bei erwarteten, Wellenbewegungen berücksichtigenden Höchstwasserständen, aus dem Wasser ragt.

6. Vorrichtung nach einem der vorhergehenden Ansprüche,
**dadurch gekennzeichnet,**
**daß** die Verankerung (16) mittels Pfahlankern (22) im Grund verankert ist.

7. Vorrichtung nach einem der vorhergehenden Ansprüche,
**dadurch gekennzeichnet,**
**daß** Ankerketten (18) der Verankerung (16) jeweils die Merkmale eines der Ansprüche 14 bis 17 aufweisen.

8. Vorrichtung nach einem der vorhergehenden Ansprüche,
**dadurch gekennzeichnet,**
**daß** mehrere, insbesondere wenigstens zwei, Ankerketten (18) der Verankerung (16) an einem gemeinsamen Abspannknotenpunkt (24) des Auftriebskörpers (14) zusammengeführt sind, wobei bevorzugt der Auftriebskörper (14) mehrere, vorzugsweise wenigstens drei, Abspannknotenpunkte (24) aufweist.

9. Vorrichtung nach einem der vorhergehenden Ansprüche,
**dadurch gekennzeichnet,**
**daß** eine mit dem Auftriebskörper (14) koppelbare, insbesondere mobile Montageeinheit vorgesehen ist, mit der die Verankerung (16) vorspannbar ist und/oder die Ankerlänge der Verankerung (16) einstellbar ist, wobei insbesondere
der Auftriebskörper (14) einen Kopplungsabschnitt (26) aufweist, an den sowohl die mobile Montageeinheit als auch die Funktionseinheit (12) koppelbar ist.

10. Vorrichtung nach Anspruch 9,
**dadurch gekennzeichnet,**
**daß** die Verankerung (16) mehrere Ankerketten (18) umfaßt und mittels der Montageeinheit gleichzeitig alle Ankerketten (18) vorspannbar und/oder gleichzeitig die Ankerlängen aller Ankerketten (18) einstellbar sind, und/oder
**daß** die Montageeinheit für jede Ankerkette (18) eine separate Spanneinrichtung umfaßt, wobei die Spanneinrichtungen mittels einer zentralen Steuereinheit gleichzeitig wahlweise mit individuellen Steuersignalen oder mit einem gemeinsamen Steuersignal beaufschlagbar sind.

11. Vorrichtung nach Anspruch 9 oder 10,
**dadurch gekennzeichnet,**
**daß** die Montageeinheit eine Ballasteinheit umfaßt, mittels welcher die Auftriebskraft des Auftriebskörpers (14) gezielt einstellbar ist, und/oder
**daß** eine Ballastregelung des Auftriebskörpers (14) mittels einer externen, insbesondere an einer mobilen Montageeinheit vorgesehenen Ballasteinheit betreibbar ist.

12. Vorrichtung nach einem der vorhergehenden Ansprüche,
**dadurch gekennzeichnet,**
**daß** der Auftriebskörper (14) mit einer Ballastregelung versehen ist, mit welcher der Auftriebskörper (14) im Wasser gezielt absenkbar und anhebbar ist, wobei insbesondere
die Ballastregelung des Auftriebskörpers (14) wenigstens eine mit Wasser füllbare und wieder entleerbare Ballastzelle umfaßt.

13. Vorrichtung nach einem der vorhergehenden Ansprüche,
**dadurch gekennzeichnet,**
**daß** mehrere Auftriebskörper, insbesondere eine große Anzahl von Auftriebskörpern, zu einem Gesamtfundament oder zu einer Gesamtplattform zusammengefaßt sind.

14. Verankerung, insbesondere Ankerkette (18), mit Eigenauftrieb in Wasser, wobei vorzugsweise der Eigenauftrieb derart bemessen ist, daß er die Gewichtskraft der Verankerung (16) im Wasser wenigstens zu einem wesentlichen Teil und bevorzugt zumindest näherungsweise vollständig kompensiert.

15. Verankerung nach Anspruch 14,
**dadurch gekennzeichnet,**
**daß** die Verankerung (16) zumindest teilweise von Auftriebselementen in Form von Hohlkörpern (28) gebildet ist, deren Auftriebskraft zumindest im wesentlichen für den Eigenauftrieb der Verankerung (16) ursächlich ist, und/oder
**daß** die Verankerung (16) zumindest teilweise von Auftriebselementen gebildet ist, die wenigstens zum Teil aus Auftriebsmaterial, insbesondere Schaumstoff, bestehen, dessen Auftriebskraft zumindest im wesentlichen für den Eigenauftrieb der Verankerung (16) ursächlich ist.

16. Verankerung nach Anspruch 14 oder 15,
**dadurch gekennzeichnet,**
**daß** zumindest einige Kettenglieder (28) einer Ankerkette (18) als Auftriebselemente ausgebildet sind, und/oder
**daß** zumindest einige Kettenglieder einer Ankerkette (18) jeweils wenigstens einen insbesondere zumindest im wesentlichen zylindrischen Hohlkörper (28) umfassen, wobei insbesondere
der Hohlkörper (28) von einem insbesondere stab- oder stangenförmigen Zugelement (30) durchsetzt ist.

17. Verankerung nach einem der Ansprüche 14 bis 16,
**dadurch gekennzeichnet,**
**daß** alle Kettenglieder (28) einer Ankerkette (18) identisch ausgeführt sind.

18. Verfahren zur ortsfesten Positionierung von Funktionseinheiten (12) wie z.B. Windkraftanlagen, Leuchttürmen, Sende- und/oder Empfangsanlagen, Radaranlagen, Forschungsstationen, Brücken, Flughäfen und dergleichen, auf dem oder im Wasser, insbesondere auf dem oder im Meer, bei dem wenigstens ein als Fundament oder als Plattform für die Funktionseinheit (12) dienender und insbesondere als Hohlkörper ausgebildeter Auftriebskörper (14) versenkt und mittels einer Verankerung (16) in einer vorgegebenen Wassertiefe verankert wird, wobei die Verankerung (16) im Wasser Eigenauftrieb besitzt.

19. Verfahren nach Anspruch 18,
**dadurch gekennzeichnet,**
**daß** der Auftriebskörper (14) an die Zielposition gebracht und bevorzugt an der Zielposition provisorisch verankert wird,
eine mobile Montageeinheit, insbesondere nach einem der Ansprüche 9 bis 11, an den Auftriebskörper (14) gekoppelt wird,
der Auftriebskörper (14) mittels einer Ballastregelung näherungsweise bis in die vorgegebene Wassertiefe abgesenkt wird,
die zuvor mit dem Auftriebskörper (14) und/oder mit der Montageeinheit verbundene Verankerung (16) am Grund befestigt wird, insbesondere an zuvor in den Grund gerammten Pfahlankern (22), und die Verankerung (16) mittels der Montageeinheit gespannt wird.

20. Verfahren nach Anspruch 18 oder 19,
**dadurch gekennzeichnet,**
**daß** im Anschluß an eine Grobspannung der Verankerung (16) ein Feinspannvorgang eingeleitet wird, bei dem
zuvor mittels einer Ballastregelung auf den Auftriebskörper (14) aufgebrachter Ballast insbesondere vollständig entfernt wird, bis sich der Auftriebskörper (14) etwas oberhalb der vorgegebenen Wassertiefe befindet,
separate Spanneinrichtungen einer Montageeinheit an eine zentrale Steuereinheit, insbesondere an einen gemeinsamen Hydraulikkreis, angeschlossen werden, mit der auf alle die Verankerung (16) bildenden Ankerketten (18) die gleiche Zugkraft aufgebracht wird, und
die Ankerketten (18) mittels der Spanneinrichtungen verkürzt werden und der Auftriebskörper (14) nach unten bis in die vorgegebene Wassertiefe gezogen wird.

21. Verfahren nach einem der Ansprüche 18 bis 20,
**dadurch gekennzeichnet,**
**daß** eine Schieflage des Auftriebskörpers (14) dadurch ausgeglichen wird, daß Ballastzellen des Auftriebskörpers (14) entsprechend gefüllt oder entleert werden, und/oder
**daß** zumindest während des Absenkens des Auftriebskörpers (14) mittels mehrerer separater Hilfsschwimmkörper eine zumindest im wesentlichen horizontale Ausrichtung des Auftriebskörpers (14) insbesondere durch Aufbringen von Zugkräften aufrechterhalten wird.

22. Verfahren nach einem der Ansprüche 18 bis 21,
**dadurch gekennzeichnet,**
**daß** wenigstens eine Vorrichtung nach einem der Ansprüche 1 bis 13 verwendet wird, und/oder
**daß** eine insbesondere mehrere Ankerketten (18) umfassende Verankerung (16) nach einem der Ansprüche 14 bis 17 verwendet wird.
